# EUROPEAN PATENT APPLICATION

(11) **EP 4 633 114 A1**
(43) Date of publication of application: **15.10.2025**
(21) Application number: 24169377.9
(22) Date of filing: 10.04.2024
(51) Int. Cl.: H04L 67/141, H04L 9/40, H04W 84/06

(54) **COMPUTER-IMPLEMENTED METHOD FOR NETWORK-ASSISTED DATA TRANSPORT**

(71) Applicant: Airbus S.A.S., 31700 Blagnac (FR)
(72) Inventor: Milheiro Mendes, Paulo-Jorge, 31700 Blagnac (FR)
(74) Representative: KASTEL Patentanwälte PartG mbB

(57) **Abstract**

The invention relates to a computer-implemented method for transporting data (40) between an end-user device (20) and a server device (24) for providing a network service via a time-varying network (12), the time-varying network (12) including a plurality of nodes (14) that are interconnected intermittently in time.

## Description

The invention relates to a computer-implemented method for transporting data, in particular for network-assisted data transport. The invention further relates to a network arrangement, a gateway device, computer program, and a computer-readable data carrier.

A time-varying network is a network whose links are active only at certain points in time. Examples of such networks include communication networks where links are intermittently available as is the case of satellite networks and mesh networks of aircrafts. Such networks may pose a challenge to provide broadband Internet access, due to the high edge-to-edge propagation delay. For instance, the propagation delay from ground-to-ground in geostationary orbit satellite networks is about 240 ms, which means a round-trip time (RTT) as large as 600 ms. In such environments, performance enhancement proxies (PEPs) aim to mitigate the poor performance of default TCP settings on high delay links, by splitting end-to-end connections in different segments such as the terrestrial and space segments in satellite networks. However, since PEPs split TCP connections, they may violate the end-to-end principle and may prevent the deployment of new protocols or protocol options. For example, the TCP Fast Open (TFO) option allows sending data together with the TCP handshake, thus minimizing the latency for connection setup. However, satellite operators may have different understandings about the usage of these options in the TCP splitting process, eventually leading to a poor end-to-end behavior. For instance, they may pass the TCP option, but the payload is separated from the initial SYN packet, and transferred after the TCP handshake, or they may simply discard the TFO option.

QUIC is a novel transport layer protocol that provides applications with flow-controlled streams for structured encrypted communication, low-latency connection establishment, and network path migration. QUIC has the potential to become a successor to TCP. The major goal of QUIC is to improve web latency, which is also a very favorable goal for time-varying networks. QUIC has another major design difference towards TCP: it ensures end-to-end data encryption including transport layer headers. In what concerns the management of transport protocols over time-varying networks, this feature may prevent the use of middleboxes such as PEPs.

The non-applicability of PEPs may pose challenges for the usage of QUIC over time-varying networks, such as satellite networks. Without PEPs, lost packets on any part of the path from sender to receiver may need to be retransmitted over all path segments, including the high-delay links of the time-varying network.

Moreover, packets may not only be dropped due to intermittent links, but also due to congestion bottleneck links. With the current loss-based congestion controls (e.g., CUBIC), QUIC implementations rely on packet losses to adjust their sending rate. Another aspect may be a slow start behavior which tries to increase the sending rate upon the reception of ACKs. The reception of ACKs may take a long time for high delay links, effectively underutilizing the available path capacity. Especially for short-lived flows, the waiting times imposed by the slow start phase may be often the crucial performance-limiting factor.

The following documents are referenced hereinafter:
[1] J. Griner et al., "Performance Enhancing Proxies Intended to Mitigate Link-Related Degradations", RFC 3135, Jun. 2001;
[2] M. Handley, "Why the Internet only just works", BT Technology Journal, vol. 24, no. 3, 7 2006;
[3] B. Trammel and M. Kuehlewind, "Report from the IAB Workshop on Stack Evolution in a Middlebox Internet (SEMI)", IETF RFC 7663, Oct 2015;
[4] Mike Kosek, Benedikt Spies, Jorg Ott, "Secure Middlebox-Assisted QUIC", in Proc. of IFIP Networking, Barcelona, Spain, July 2023;
[5] "The Onion Router", [Accessed 2023-Apr-28]. [Online]. Available: https://www.torproiect.org
[6] G. Yuan et al., "Sidecar: in-network performance enhancements in the age of paranoid transport protocols", HotNets, 2022;
[7] Y. Wang, "tinyfecVPN" [Accessed 2023-Apr-28]. [Online]. Available: https://github.com/wangyu-/tinyfecVPN
[8] Z. Hu et al., "Specification for DNS over Transport Layer Security (TLS)", Internet RFC 7858, May 2016;
[9] P. E. Hoffman and P. McManus, "DNS queries over HTTPS (doh)", Internet RFC 8484, Oct 2018;
[10] T. V. Doan et al., "Evaluating Public DNS Services in the Wake of Increasing Centralization of DNS", in IFIP Networking, Aalto, Finland, Jun 2021;
[11] C. Huitema et al., "DNS over Dedicated QUIC Connections," Internet RFC 9250, May 2022;
[12] J. Iyengar et al., "QUIC: A UDP-Based Multiplexed and Secure Transport", Internet RFC 9000, May 2021;
[13] Mark Handley, "Using ground relays for low-latency wide-area routing in megaconstellations", Proc. of ACM Workshop on Hot Topics in Networks, Princeton, USA, November 2019;
[14] S. Kent, R. Atkinson, "IP Encapsulating Security Payload (ESP)", Internet RFC 2406, Nov 1998; and
[15] P. Marques, R. Raszuk, K. Patel, K. Kumaki, T. Yamagata, "Internal BGP as the Provider/Customer Edge Protocol for BGP/MPLS IP Virtual Private Networks (VPNs)", Internet RFC 6368, Sept 2011.

The object of the invention is to provide an improved data transport protocol that enables end-to-end encryption, in particular over time-varying networks.

To achieve this object, the invention provides a computer-implemented method according to claim 1. A network arrangement, a gateway device, a computer program, and a computer-readable data carrier are subject-matter of the parallel claim.

Advantageous embodiments of the invention are subject-matter of the dependent claims.

In one aspect, the invention provides a computer-implemented method for transporting data between an end-user device and a server device for providing a network service via a time-varying network, the time-varying network including a plurality of nodes that are interconnected intermittently in time, the method comprising:
a) Providing a plurality of gateway devices, each gateway device being connectable to at least one node of the time-varying network;
b) Registering one or more network services at the plurality of gateway devices, by indicating for each network service, to at least one of the gateway devices, respectively, at least one connected server device for providing said network service as suitable server device;
c) Requesting, by an end-user device, a registered network service at one of the gateway devices, said gateway device constituting an ingress gateway device;
d) Selecting, by the ingress gateway device and representative for the end-user device, a gateway device having been indicated at least one connected server device for providing the requested network service as suitable server device, the selected gateway device constituting an egress gateway device;
e) Establishing at least one end-to-end encrypted transport connection between the end-user device and a server device (corresponding based on d) for providing the registered and requested network service via the ingress gateway device, the time-varying network, and the egress gateway device; and
f) Transporting data between the end-user device and the corresponding server device by means of the established transport connection.

Preferably, the step f) comprises transporting data in form of a plurality of data packages between the ingress gateway device and the egress gateway device, each data package including a data package ordinal identifier for identifying an order of the data packages.

Preferably, the method further comprises on or both of the following:
f1) Encapsulating, by the ingress gateway device and/or the egress gateway device, data received from the end-user device or the corresponding server device, respectively, in form of data packages ordered based on said data package ordinal identifier; and/or
f2) Forwarding, by the ingress gateway device and/or the egress gateway device, data received in form of data packages via the time-varying network, to the end-user device or the corresponding server device, respectively, based on the data package ordinal identifier.

Preferably, the method further comprises:
g) Queuing, by the ingress gateway device and/or the egress gateway device, respectively, one or more data packages, if at least one respective pre-ordered data package misses at the ingress gateway device or the egress gateway device, respectively.

Preferably, step g) comprises one or both of the following:
g1) Queuing for a preset queuing duration; and/or
g2) Queuing for a preset maximum amount of data and/or a maximum number of data packages.

Preferably, the method further comprises one or both of the following:
g3) Recovering data by requesting re-transmission of any data package missed at a gateway device from the respective previous gateway device; and/or
g4) Reporting a re-transmission of and/or a data miss event with respect to any data package to the ingress gateway device as connection-related information.

Preferably, step d) further comprises:
d1) Querying, by the ingress gateway device and representative for the end-user device, at least one gateway device having been indicated at least one connected server device for providing the requested network service as suitable server device; and
d2) Acknowledging, by the ingress gateway device and to the end-user device, a response of a corresponding server device based on the querying.

Preferably, step b) further comprises:
b1) By the at least one gateway device having been indicated at least one connected server device for providing the network service as suitable server device, announcing said network service to the plurality of gateway devices via the time-varying network.

Preferably, the method further comprises:
h) Gathering, by the ingress gateway device, connection-related information with respect to the data transport over the at least one established transport connection.

Preferably, the method further comprises one or both of the following:
i) Selecting, based on said connection-related information, the egress gateway device in any subsequent data transport; and/or
j) Migrating, based on said connection-related information, the at least one established transport connection to another suitable server device.

Preferably, the connection-related information is based on a number of reported re-transmissions and/or an accumulated delay of the data transport and/or an amount of delayed data and/or a number of delayed data packages.

In another aspect, the invention provides network arrangement comprising means for carrying out the method according to any of the preceding embodiments.

In another aspect, the invention provides a gateway device adapted for said network arrangement.

In another aspect, the invention provides a computer program which, when the program is executed by a network arrangement, cause the network arrangement to carry out the method of any of the preceding embodiments.

In another aspect, the invention provides a computer-readable data carrier having stored thereon the computer program.

Preferred embodiments of the invention may be summarized as follows:
Preferred embodiments provide a mechanism to augment the performance of transport protocols like QUIC over time-varying networks, by replacing PEPs (which splits end-to-end connectivity) with gateways that are essentially packet handlers and forwarders. Preferably, the proposed gateways assist a fast and secure setup of transport connections, avoiding the need to rely on (encrypted) Domain Name Systems (DNS). Moreover, the gateways may support the continuity of transport connections by detecting and retransmitting lost packets over different segments of the time-varying network, avoiding congestion by controlling the load of transport connections between the set of service servers available on the edges of the time-varying network. Moreover, the proposed mechanism may ensure edge-to-edge encryption, hiding the IP addresses of clients and servers inside the network, ensuring the privacy of end-users.

Performance enhancement proxies operate as middleboxes that rely on the access to information conveyed in the end-to-end connection and on the ability to modify protocol exchanges to optimize Internet access over time-varying networks, with some common practices documented by the IETF [1]. Acting upon these assumptions may contribute to the ossification of the Internet as the expected behavior may become a prerequisite for traffic to pass now and in the future [2], [3]. Thus, middleboxes, built for performance improvement, may hinder future network and protocol evolution. Hence, there is a consensus about the need to protect the end-to-end information exchange from observation and modification inside the network.

With virtually ubiquitous TLS and now the uptake of QUIC, application and transport layer information is no longer accessible to middleboxes. QUIC's encryption and authentication mean that connections cannot be neither split by middleboxes, nor can middleboxes understand the sequence or acknowledgment numbers in transit. This means that it may be impossible for a middlebox to adjust the end-to-end loss-detection, re-transmission, congestion-control scheme of the transport protocol only by its own initiative.

Hence, enhancing transport over time-varying networks may require middleboxes to be explicitly integrated, under the control of end-users, or transparently used without splitting transport connections.

This implies that introducing middleboxes may require a conscious decision and consent by one or both endpoints of an end-to-end connection to selectively expose information to specific nodes. For a protocol like QUIC, this may involve redesigning the system of cryptographic keys and header encryption so that a host could credential a middlebox for limited access to some transport headers (e .g., sequence and acknowledgment numbers) without compromising other security properties. However, this may add considerable complexity and may tightly couple the transport protocol to a PEP's possible needs.

Another alternative to avoid having middleboxes accessing limited transport information, may be to create a hierarchical encryption system by having end-users explicitly including middleboxes en route either during the initial setup or later based on transport connection redirection mechanisms [4]. In this case end-users transfer the QUIC encrypted connection to middleboxes, while an extra encryption level is used end-to-end. This is also the case of the Onion Router [5], which explicitly expands a connection through relays hop-by-hop, splitting up the transport connections but achieving end-to-end security through multiple levels of encryption. In these cases, the explicit inclusion of middleboxes by end-users can be done only on-path (during initial setup or via redirection), but also by establishing an independent signaling channel between one or both endpoints and one or more middleboxes. In both cases, the amount of information shared is controllable by the endpoints, which need to become explicitly aware of the properties of all possible middleboxes to make a suitable selection decision. Moreover, end-users may have access only to on-path middleboxes, via probing schemes, which may not provide the right support to allow traffic to o over a time-varying network such as a LEO constellation, such as traffic classification [6] and error repair [7], as well as adaptation to dynamic network conditions by, e.g., redirecting transport connections to different service instance, or load balancing traffic between servers.

An alternative for the usage of hierarchical encryption systems in which middleboxes, explicitly included by end-users en route, support a chain of QUIC connections, is the deployment of gateways that operate below the transport layer, as augmented routers, and which my no not rely on any information carried by the transport protocol. This is an idea of preferred embodiments of the invention.

Although QUIC can secure end-to-end transport sessions, the initial setup of a transport connection starts by the resolution of a service name into an appropriate IP address of a suitable server, which is based on unencrypted DNS calls. A solution for this problem may reside in using encrypted DNS, which has only recently gained traction with the standardization of DNS over TLS (8) and DNS over HTIPS (DoH) [9].

In this regard, browsers offer the possibility to encrypt DNS traffic using DoH, enabling users to opt-in into encrypted DNS with a public DNS resolver [10] of their choice. While DoH adds privacy to the DNS, it remains rarely used, and it may have an impact on web performance, since DoH requires multiple round-trips for the handshake of the TCP and TLS sessions. This limitation can be overcome by having DNS being transported over QUIC [11].

This may be an interesting setup since QUIC was designed in tandem with HTTP3 with focus on the encrypted web. While HTTP3 leverages QUIC as a transport protocol, requests can be multiplexed over a single QUIC connection, greatly reducing the overhead of HTTP2, and achieving reduced page load times.

However, even when using QUIC for both DNS resolution and HTTP3 transport, the improvements may still be uncoupled, although Content Distribution Network providers like Cloudflare offer both, public DNS services and web content delivery on the same edge infrastructure, which may be reachable via a time-varying network, such as a LEO constellation. Hence, an idea of preferred embodiments is also to develop mechanisms to couple name resolution and transport session setup, while trying to avoid the extra latency needed to cross time-varying networks and to ensure end-user privacy.

Hence, preferred embodiments of the invention describe a mechanism to augment the performance of transport protocols like QUIC over time-varying networks, by preferably replacing PEPs (which splits end-to-end connectivity) with gateways that are essentially packet handlers and forwarders.

The proposed gateways may implement edge-to-edge signaling allowing coupling name resolution and initial transport handshakes to support fast and secure setup of transport connections, avoiding the need to rely on (encrypted) Domain Name Systems (DNS). To augment end-to-end performance, the proposed system preferably aims to select unloaded server instances to set up transport connections, avoiding service congestion.

The proposed edge-to-edge system is preferably able to support the continuity of established transport connections by leveraging IPv6 header extensions for the control of traffic between the edges of the time-varying network. Header extensions are used to hide the IP addresses of clients and servers inside the network, ensuring the privacy of end-users, as well as to detect and retransmit lost packets over different segments of the time-varying network. Moreover, the proposed edge-to-edge system is preferably able to react to degraded paths by redirecting transport connections between the set of service servers available on the edges of the time-varying network.

In comparison with other approaches that also aim to enhance the performance of end-to-end data transport, embodiments of the invention preferably have one, several, or all of the following further advantages and effects:
- Support secure name resolution with lower latency than using DNS over QUIC;
- Setup transport connections to the most suitable server, such as servers with lower load aiming to ensure lower service congestion levels;
- Recover lost packets aiming to support end-to-end congestion control mechanisms;
- Redirect transport connections to avoid paths with poor performance, being aligned with QUIC capability to redirect traffic securely [12];
- Ensure the privacy of end-users inside the time-varying network;
- Require several levels of encryption;
- Do not require transport information to be exposed;
- Do not require the splitting of end-to-end communication sessions; and/or
- Do not require end-users to discover middleboxes as well as authorization and auditability.

Embodiments of the invention are now explained in more detail with reference to the accompanying drawings of which
- Fig. 1: shows an embodiment of a network arrangement;
- Fig. 2: shows an embodiment of a computer-implemented method for transporting data;
- Fig. 3: shows an embodiment of a step of the method;
- Fig. 4: shows a first embodiment of another step of the method;
- Fig. 5: shows a second embodiment of said step; and
- Fig. 6: shows a scheme of an embodiment of the method.

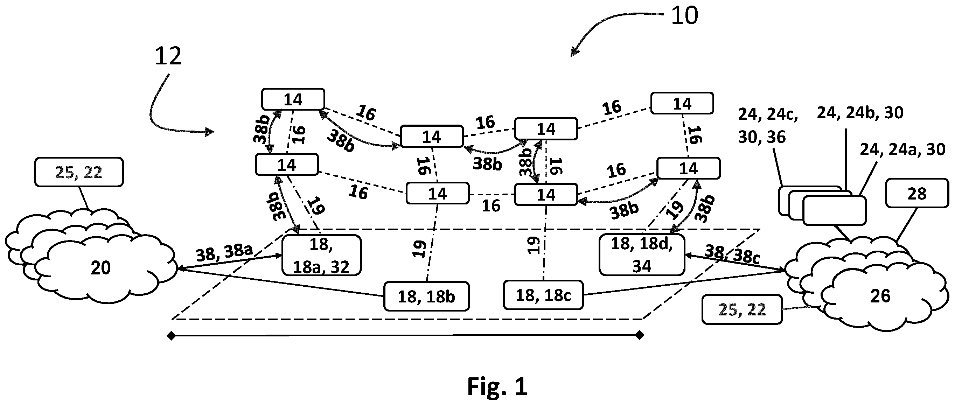

Fig. 1 shows an embodiment of a network arrangement 10.

The network arrangement 10 includes a time-varying network 12. The time-varying network 12 includes a plurality of nodes 14 that are interconnected intermittently in time.

In other words, connections 16 between the nodes 14 may change in time. A reason for this may be that the nodes 14 are moving in time and node-node connections 16 between nodes may only exist, if a distance between the nodes 14 is below a maximum connection distance. Each node 14 may, for example, be included in a satellite orbiting around the Earth. Thus, the time-varying network 12 may, but not limited to that, be regarded as a system of a plurality of satellites interconnected intermittently in time.

The network arrangement 10 further includes a plurality of gateway devices 18, here a first gateway device 18a, a second gateway device 18b, a third gateway device 18c, and a fourth gateway device 18d. At the instance in time as shown in Fig. 1, each of the gateway devices 18 is connected to one node 14 of the time-varying network. Since the nodes 14 of the time-varying network 12 may move, gateway-node connections 19 may also be arranged intermittently in time. The gateway device 18 may respectively maintain a position. However, the invention is not limited to that and one or more gateway devices 18 may also be moving in time. The gateway devices 18 as such are not directly connected to each other. Thus, communication between gateway devices 18 is performed over the time-varying network 12.

The network arrangement 10 further includes a plurality of end-user devices 20. The end-user devices 20 may respectively be, for example, a computing device, such as a personal computer, mobile device, smartphone and/ or tablet. The end-user devices 20 are respectively connected to a dynamic host configuration protocol (DHCP) server 25 for assigning an internet protocol (IP) address 22 to the corresponding connected end-user device 20.

The network arrangement 10 further includes a plurality of server devices 24 for providing a respective network service, here a first server device 24a, a second server device 24b, and a third server device 24c. The server devices 24 are respectively provided with an IP address 22 by another DHCP server 25 of an internet service provider 26. The provided IP addresses 22 for each of the server devices 24 may be registered in a domain name system (DNS) server 28.

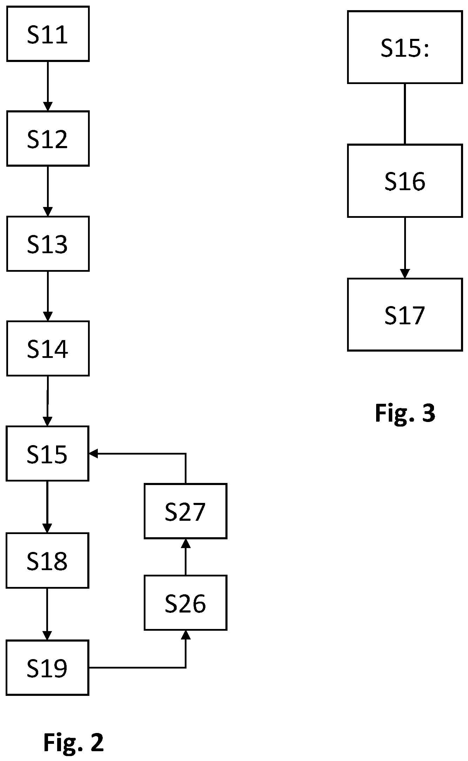

Fig. 2 shows an embodiment of a computer-implemented method for transporting data between one of the end-user devices 20 and one of the server devices 24 for providing the respective network service via the time-varying network 12.

In a step S11, the method includes:
- Providing the plurality of gateway devices 18, each gateway device being connectable to at least one node 14 of the time-varying network 12.

In a step S12, the method includes:
- Registering one or more network services at the plurality of gateway devices 18, by indicating for each network service, to at least one of the gateway devices 18, respectively, at least one connected server device 24 for providing said network service as suitable server device 30.

In other words, network services and their corresponding IP address 22 are registered at the plurality of gateway devices 18, in contrast to the DNS server 28 as mentioned before.

In a step S13, the step S12 may include:
- By the at least one gateway device 18 having been indicated at least one connected server device 24 for providing the network service as suitable server device 30, announcing said network service to the plurality of gateway devices 18 via the time-varying network 12.

In other words, each gateway device 18 announces its respective registered network services to the other gateway devices 18. Thus, each gateway device 18 knows which network service is provided by itself and by other gateway devices 18.

In a step S14, the method includes:
- Requesting, by the end-user device 20, the registered network service at one of the gateway devices 18, said gateway device 18 constituting an ingress gateway device 32.

As an example, the ingress gateway device 32 for one of the end-user devices 20, may be the first gateway device 18a.

In a step S15, the method includes:
- Selecting, by the ingress gateway device 32 and representative for the end-user device 20, a gateway device 18 having been indicated at least one connected server device 24 for providing the requested network service as suitable server device 30, the selected gateway device 18 constituting an egress gateway device 34.

In the example, the first server device 24a, the second server device 24b, and the third server device 24c are respectively suitable server devices 30. The third gateway device 18c has been indicated the first server device 24a as suitable server device 30. The fourth gateway device 18d has been indicated the second server device 24b and the third server device 24c as suitable server device 30, respectively.

Thus, in the example, the ingress gateway device 32 selects, representative for the end-user device 20, the fourth gateway device 18d as egress gateway device 34. In this context, the term "representative for" may indicate that the IP address 22 of the end-user device 20 remains exclusively known to the ingress gateway device 32.

Fig. 3 shows an embodiment of step S15. In this embodiment, step S15 includes in a step S16:
- Querying, by the ingress gateway device 32 and representative for the end-user device 20, at least one gateway device 18 having been indicated at least one connected server device 24 for providing the requested network service as suitable server device 30;
and in a step S 17:
- Acknowledging, by the ingress gateway device 32 and to the end-user device 20, a response of a corresponding server device 36 based on the querying.

In step S16, the ingress gateway device 32 may query the fourth gateway device 18d. In the example, the fourth gateway device 18d has been indicated the second server device 24b and the third server device 24c as suitable server device 30. Since the gateway device 32 are not directly connected to each other, the querying is performed from the ingress gateway device 32 over the time-varying network 12.

In step S16, upon querying the fourth gateway device 18d, the fourth gateway device 18d as egress gateway 34 may itself query the second server device 24b and/or the third server device 24c. These may respond directly to the ingress gateway device 32 with their respective IP address 22.

In step S17, the ingress gateway device 32 may then acknowledge a response of one of the responding server devices 24b, 24c, said acknowledged server device being the corresponding server device 36. In the example, the third server device 24c may be the corresponding server device 36. The ingress gateway device 32 may then forward the acknowledge response of the corresponding server device 36 to the end-user device 20.

Reference is made again to Fig. 2. In a step S18, the method further includes:
- Establishing at least one end-to-end encrypted transport connection 38 between the end-user device 20 and the corresponding server device 36 for providing the registered and requested network service via the ingress gateway device 32, the time-varying network 12, and the egress gateway device 34.

In step S18, the IP address 22 of the corresponding server device 36 is delivered to the end-user device 20. At this stage, the IP address 22 of the end-user device 20 may still be unknown to the corresponding server device 36. As the IP address 22 of the corresponding server device 36 is at least known to the end-user device 20, the end-to-end encrypted transport connection 38 between the end-user device 20 and the corresponding server device 36 can be established.

This end-to-end encrypted transport connection 38 is provided via the ingress gateway device 32, the time-varying network 12, and the egress gateway device 34 and includes an first connection portion 38a from the end-user device 20 to the ingress gateway device 32, a second connection portion 38b from the ingress gateway device 32 to the egress gateway device 34, and a third connection portion 38c from the egress gateway device 34 to the corresponding server device 36, wherein the second connection portion 38b is established by means of the time-varying network 12.

In a step S19, the method further includes:
- Transporting data between the end-user device 20 and the corresponding server device 36 by means of the established transport connection 38.

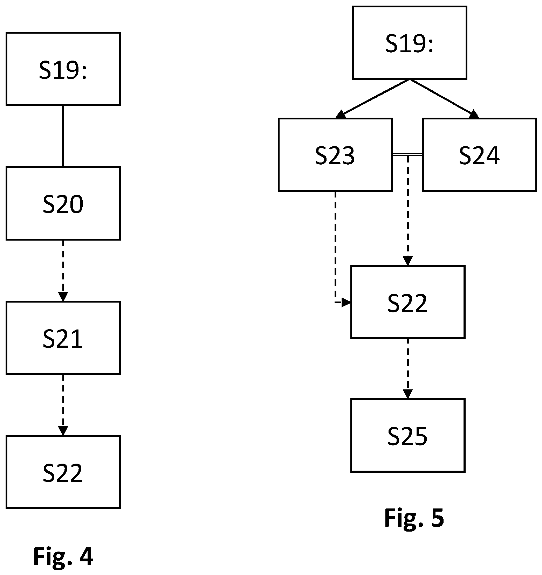

Fig. 4 shows an embodiment of step S19. In this embodiment, step S19 includes in a step S20:
- Transporting data 40 in form of a plurality of data packages 42 between the ingress gateway device 32 and the egress gateway device 34, each data package 42 including a data package ordinal identifier 44 for identifying an order of the data packages 42.

By means of the end-to-end encrypted transport connection, data 40 may be transported encrypted between the end-user device 20 and the corresponding server device 36.

The encrypted data 40 that is received and/or forwarded by the ingress gateway device 32 or the egress gateway device 34, respectively, may be processed after receiving or before forwarding. For instance, the encrypted data 40 may be processes in form of a plurality of data packages 42.

For example, the encrypted data 40 may be collected at the ingress or egress gateway device 32, 34 and then divided into the plurality of data packages 42 of smaller size. For identifying an order of the data packages 42 during the data transport, the data package ordinal identifier 44 may be included in or added to the data package 42. Said data packages 42 may, additionally, be compressed and/or supplementarily encrypted between the ingress or egress gateway 32, 34.

According to Fig. 4, step S20 may further include in a step S21 :
- Encapsulating, by the ingress gateway device 32 and/or the egress gateway device 34, data 40 received from the end-user device 20 or the corresponding server device 36, respectively, in form of data packages 42 ordered based on said data package ordinal identifier 44;
and in a step S22:
- Forwarding, by the ingress gateway device 32 and/or the egress gateway device 34, data 40 received in form of data packages 42 via the time-varying network 12, to the end-user device 20 or the corresponding server device 36, respectively, based on the data package ordinal identifier 44.

When the plurality of data packages 44 is received from the ingress gateway device 32 and/or the egress gateway device 34, respectively, in form of a plurality of encapsulated data packages 42, these encapsulated data packages 42 can be de-capsulated therefrom. In this context, the term "de-capsulating" does not indicate that the end-to-end encryption between the end-user device 20 and the corresponding server device 36 gets lost, but the end-to-end encryption is still maintained.

The de-capsulated data packages 42 may be merged again by the ingress gateway device 32 and/or egress gateway device 34 in an ordered manner, namely based on the data package ordinal identifier 44.

Fig. 5 shows another embodiment of step S19. In this embodiment, step S19 includes in a step S23:
- Queuing, by the ingress gateway device 32 and/or the egress gateway device 34, respectively, one or more data packages 42, if at least one respective pre-ordered data package 42 misses at the ingress gateway device 32 or the egress gateway device 34, respectively.

Data packages 42 may be forwarded and/or arrive at the ingress gateway device 32 and/or the egress gateway device 34, respectively, at different times. This may be due to the time-varying network 12, for instance, when an existing node-node connection 16 breaks and/or a new node-node connection 16 is established. Also, data packages 42 may be routed by and through the time-varying network 12 on different paths. Another reason may be that one or more nodes of the time-varying network 12 are down, congested, and/or not ready for routing.

Thus, data packages 42 may not arrive at the ingress gateway device 32 and/or the egress gateway device 34, respectively, in the right order according to their data package ordinal identifier 44.

In this case, the ingress gateway device 32 and/or the egress gateway device 34, respectively, may queue one or more data packages 42 and wait, if the missed pre-ordered data package 42 arrives within a preset queuing duration.

If it does not arrive within the preset queuing duration, the ingress gateway device 32 and/or the egress gateway device 34, respectively, may proceed according to step S22, but without the data 40 corresponding to the missing data package 42. If the missing data package 42 arrives within the preset queuing duration, the ingress gateway device 32 and/or the egress gateway device 34, respectively, may again proceed according to step S22, but including the data 40 corresponding to the missing data package 42.

According to the embodiment as shown in Fig. 5, step S19 may further include in a step S24:
- Recovering data 40 by requesting re-transmission of any data package 42 missed at a gateway device 18, 32, 34 from the respective previous gateway device 18, 32, 34.

The end-to-end encrypted transport connection 38 runs over the ingress gateway device 32 and the egress gateway device 34. However, the end-to-end encrypted transport connection 38 may also run over one or more further gateway devices 18 between the ingress gateway device 32 and the egress gateway device 34. If a data package 42 misses at a gateway device 18, 32, 34 - for example, for reasons as mentioned before - the data 40 may be recovered by requesting re-transmission of said data package 42 from the respective previous gateway device 18, 32, 34, may that be the ingress gateway device 32, egress gateway device 34, or any gateway device 18 between the ingress gateway device 32 and the egress gateway device 34.

In an embodiment, step S23 and step S24 may be performed in parallel. In other words, while waiting for the missed pre-ordered data package 42, the ingress gateway device 32 and/or the egress gateway device 34, respectively, may additionally request re-transmission of said data package 42. If the missed data package 42 does not arrive within the preset queuing duration, even though re-transmission has been requested, the ingress gateway device 32 and/or the egress gateway device 34, respectively, may proceed according to step S22.

According to the embodiment as shown in Fig. 5, step S19 may further include in a step S25 that any re-transmission of any data package 44 and/or any data miss event with respect to any data package 44 may the reported to the ingress gateway device 32 as connection-related information 46.

Reference is made again to Fig. 2. In a step S26, the method may further include:
- Gathering, by the ingress gateway device 32, the connection-related information 46 with respect to the data transport over the at least one established transport connection 38.

The gathered connection-related information 46 may in a step S27 be used, for example, for selecting, based on said connection-related information 46, the egress gateway device 34 in any subsequent data transport; and/or for migrating, based on said connection-related information 46, the at least one established transport connection 48 to another suitable server device.

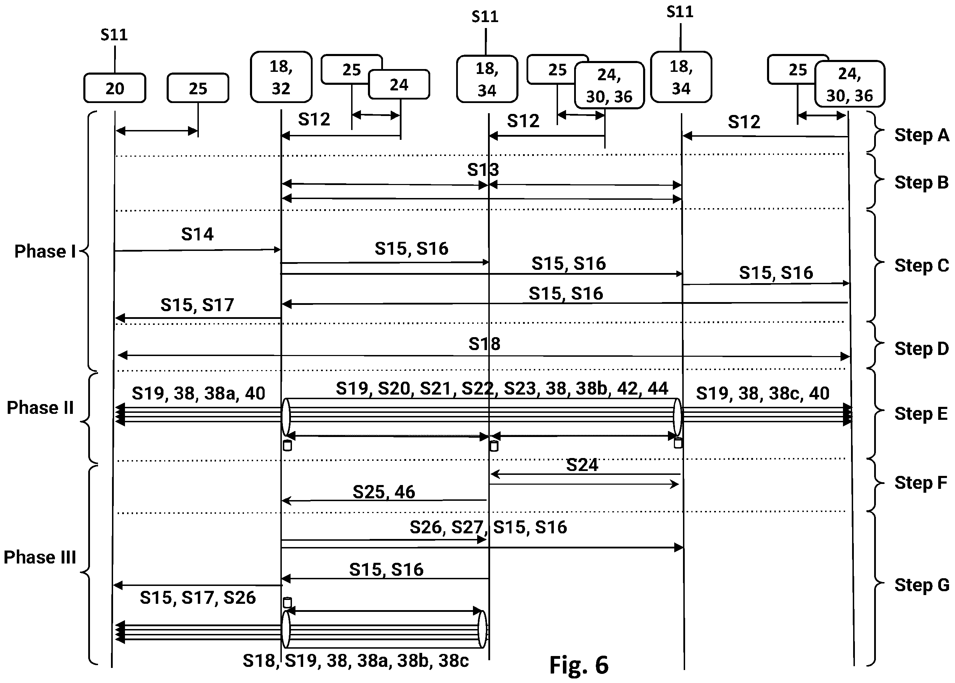

Fig. 6 shows scheme of an embodiment of the computer-implemented method. With reference to Fig. 6, preferred embodiments of the invention may be summarized as follows:
As mentioned before, preferred embodiments of the invention provide a mechanism to augment the performance of transport protocols like QUIC over time-varying networks, based on a set of gateways that are essentially packet handlers and forwarders.

As illustrated in Fig. 2, the proposed embodiments are preferably implemented by a set of gateways that use edge-to-edge signaling to couple name resolution and initial transport handshakes, as well as to augment end-to-end transport performance by selecting unloaded service servers to set up transport connections, avoiding service congestion. The proposed edge-to-edge system is preferably also used to support the control of traffic between the edges of the time-varying network.

### 1. Overall functionality:

In preferred embodiments of the invention, it is assumed that end-user devices are configured to use a local gateway, installed for instance in a local satellite terminal or provided by the local Internet Service Provider. The IP address of this local gateway may be returned via existing mechanisms such as Dynamic Host Configuration Protocol (DHCP). The overall signaling of the proposed solution preferably encompasses the following eight steps:

### Phase I: Service preparation

### Step A:

End-users (client and server) get the IP address of a gateway via mechanisms such as DHCP. Servers register their service near the closest gateway.

### Step B:

Gateways exchange information about locally reachable services, making use of protocols such as iBGP.
- Gateways preferably work as local name resolvers, associating other gateways to different name services. Having more than one neighbor gateway available to reach a server instantiating a certain service allows load-balancing and resilience to be implemented by the gateway (see later steps).

### Step C:

Client sends a request to its ingress gateway (e.g., configuring SOCKS Proxy) asking to resolve service name (e.g., www.airbus.com), instead of using DNS requests (over QUIC) to a DNS server that may be located in the over side of the time-varying network, aiming to: i) keep client privacy since only the local (trusted) gateway knows about the client interest on a specific service; ii) keep low latency by having the name resolved closer to the client.
- Based on the client's request, which includes a TLS client hello message, the ingress gateway queries other gateways that support that service to discover the most suitable server, for instance considering local load balancing policies as well as TLS related information such as compression methods, cypher suites. Piggybacking TLS information aims to support 0-RTT secure session setup;
- The selected server replies with its IP address as well as TLS information, such as server version, session ID, compression methods and cipher suites;
- The ingress gateway: i) stores the IP address of the selected server in a list of active connections, indexed by the service name and referring to the egress gateway; ii) passes the server IP address, as well as the TLS information to the client.

### Step D:

Client uses the returned server IP address to complete the establishment of the TLS connection with the server, namely with the exchange of certificates, and pre-master secret.

### Phase II: Data exchange

### Step E:

Client uses the returned server IP address and results of the TLS handshake in any following QUIC connection, allowing QUIC 0-RTT handshakes. QUIC connections are not stopped/split in gateways. When an ingress gateway receives IP packets, it starts by classifying them based on the local stored service information. If the IP packets have as destination a server locally associated to a managed service, the ingress gateway:
- Gets the IP address of the egress gateway from the local list of active connections;
- Encapsulates the received IP packet or packets (gateway can include more than one received IP packet in the same IPv6 packet) into an IPv6 packet with its IP address as source address and having the egress gateway as destination address. The following IPv6 extension headers may be used:
   ∘ Routing header, to list one or more intermediate gateways to be visited on the way to the egress gateway, being this information provided by the routing protocol (e.g. the selected internal path may pass by another gateway [13]).
   ∘ Hop-by-hop header, with information about the transported connection that may be examined and processed by every visited device in the delivery path. The information encoded in this header is derived from the connection ID and packet number, extracted from the QUIC header.
   ∘ Encapsulating Security Payload header [14], which encrypts the payload the IPv6 packet, making it unreadable to unauthorized entities during transmission;
- Buffers created IPv6 packets for packet recovery and congestion control (check hereinafter).

### Phase III: Error correction

### Step F:

Gateways at the end of a network segment (defined by the Routing extension header) may detect lost IPv6 packets, by checking the information of the hop-by-hop extension header, and initiate a packet recovery process by sending, for instance, an ICMPv6 report to the previous gateway in the network segment, as indicated in the IPv6 header, who retransmits the missing packet. Gateway that retransmits packets send periodic messages to the ingress gateways reporting the status of the transmission. On the other hand, if no packet loss is detected, the gateway that is the destination of the IPv6 packet, the egress gateway, de-encapsulates and forwards the IP packet transported inside the IPv6 packet.

### Step G:

The ingress gateway may trigger a new server discovery phase if the number of packet retransmission requests inside the network raises about a threshold, meaning that the current edge-to-edge path is facing consistent limitations. When a new server is discovered:
- The ingress gateway updates local stored information about servers being used for a certain service;
- The ingress gateway informs the end-user about the new IP address, by making use of the QUIC migration function, namely non-probing frames;
- Client initiates path validation to verify the server ownership of the new address.

### 2. Secure connection setup with load-balancing:

To support local name resolution inside the time-varying network, the gateways preferably gather information about the locally reachable services based on: local announcements/registration by neighbor Internet Service providers or by querying local DNS for popular service names (names of services that are requested frequently).

As illustrated in Fig. 2, gateways preferably make use of an existing edge-to-edge routing protocol, such as internal BGP (iBGP) [15] to announce reachability service information inside the time-varying network. Based on such announcements, each gateway may be able to reach a specific service via more than one neighbor gateways.

After a service resolution request, the ingress gateway preferably stores information about the matching of the requested service and the selected server.

This information may be used in follow up requests to the same service, in which case the ingress gateway selects servers based on the local stored policy, which by default is a round robin one. A weighted round robin policy may be used, for instance, based on information about the volume of traffic transported in previous transport connections. Such volume of traffic can be measured by checking the number of exchanged packets and packet size (e.g., QUIC requires transmission of at least 1350 bytes of UDP packets on IPv6).

### 3. Local recovery:

Preferred embodiments of the invention aim to leverage IPv6 extension headers to support packet recovery in time-varying network to achieve better data delivery by making packet loss recovery faster. However, by having gateways controlling local recovery processes, preferred embodiments may no not replace the end-to-end loss recovery process used by the transport protocol.

In preferred embodiments, gateways may queue packets for retransmission, as well as to avoid out-of-order packets. Such gateways can be ingress, egress or any gateway that appears in an internal edge-to-edge path. Any gateway at the end of a network segment, as identified by the Routing header, may buffer out-of-order packets for a while, giving some time for missing packets to be retransmitted over that network segment, as indicated in the IPv6 header extension.

The buffer management preferably passes, by determining how many out-of-order packets can be buffered at the end of each network segment, before it gives up waiting for a successful local re-transmission. In some extreme cases, the lost packet may not be recovered successfully in a succession of segments and the client may invoke end-to-end re-transmission.

If an operator of a time-varying network would like to avoid a decrease of the general network throughput, gateways may be configured to recover packets at the end of any segment by means of forward error correction mechanism instead of packet re-transmission.

### 4. Congestion control:

Edge-to-edge communication inside a time-varying network can sometimes be faster when traffic is sent via a set of segments than if sent directly to egress gateway, since additional devices at the end of each segment may do a better adjustment of the packet forwarding rate on each segment entirely.

With preferred embodiments of the invention, the device at the beginning of each segment may be able to determine exactly which packets have yet to be received in the segment, using that information to influence the forwarding rate. For example, a gateway can drain a buffer of unforwarded IPv6 packets at a slower rate if it detects that many packets have yet to be received.

Another aspect of congestion control performed in the time-varying network is related to the redirection of the current transport connection to a new server. As mentioned in *1. Overall functionality,* the ingress gateways may trigger a new server discovery phase if the number of packet re-transmission requests on its network segment raises about a threshold, meaning that the current edge-to-edge path inside the time-varying network is facing consistent limitations.

The invention is embodied in the computer-implemented method as described herein. The invention is further embodied in the network arrangement 10 comprising means for carrying out said method and the gateway device 18 adapted for said network arrangement 10. The invention is further embodied in a computer program which, when the program is executed by a network arrangement, cause the network arrangement to carry out the described method. The invention is further embodied in a computer-readable data carrier having stored thereon said computer program.

### List of reference signs:

- 10: network arrangement
- 12: time-varying network
- 14: node
- 16: node-node connection
- 18: gateway device
- 18a: first gateway device
- 18b: second gateway device
- 18c: third gateway device
- 19: gateway-node connection
- 20: end-user device
- 22: IP address
- 24: server device
- 24a: first server device
- 24a: second server device
- 24c: third server device
- 25: DHCP server
- 26: internet service provider
- 28: DNS server
- 30: suitable server device
- 32: ingress gateway device
- 34: egress gateway device
- 36: corresponding server device
- 38: end-to-end encrypted transport connection
- 38a: first connection portion
- 38b: second connection portion
- 38c: third connection portion
- 40: data
- 42: data package
- 44: data package ordinal identifier
- 46: connection-related information

## Claims

1. A computer-implemented method for transporting data (40) between an end-user device (20) and a server device (24) for providing a network service via a time-varying network (12), the time-varying network (12) including a plurality of nodes (14) that are interconnected intermittently in time, the method comprising:
a) Providing a plurality of gateway devices (18), each gateway device being connectable to at least one node (14) of the time-varying network (12);
b) Registering one or more network services at the plurality of gateway devices (18), by indicating for each network service, to at least one of the gateway devices (18), respectively, at least one connected server device (24) for providing said network service as suitable server device (30);
c) Requesting, by an end-user device (20), a registered network service at one of the gateway devices (18), said gateway device constituting an ingress gateway device (32);
d) Selecting, by the ingress gateway device (32) and representative for the end-user device (20), a gateway device (18) having been indicated at least one connected server device (24) for providing the requested network service as suitable server device (30), the selected gateway device (18) constituting an egress gateway device (34);
e) Establishing at least one end-to-end encrypted transport connection (38) between the end-user device (20) and a corresponding server device (36) for providing the registered and requested network service via the ingress gateway device (32), the time-varying network (12), and the egress gateway device (34); and
f) Transporting data (40) between the end-user device (20) and the corresponding server device (36) by means of the established transport connection (38).

2. The method according claim 1, **characterized in that** step f) comprises transporting data (40) in form of a plurality of data packages (42) between the ingress gateway device (32) and the egress gateway device (34), each data package (42) including a data package ordinal identifier (44) for identifying an order of the data packages (42).

3. The method according to claim 2, further comprising one or both of the following:
f1) Encapsulating, by the ingress gateway device (32) and/or the egress gateway device (34), data (40) received from the end-user device (20) or the corresponding server device (36), respectively, in form of data packages (42) ordered based on said data package ordinal identifier (44); and/or
f2) Forwarding, by the ingress gateway device (32) and/or the egress gateway device (34), data (40) received in form of data packages (42) via the time-varying network (12), to the end-user device (20) or the corresponding server device (36), respectively, based on the data package ordinal identifier (44).

4. The method according to claim 3, further comprising:
g) Queuing, by the ingress gateway device (32) and/or the egress gateway device (34), respectively, one or more data packages (42), if at least one respective pre-ordered data package (42) misses at the ingress gateway device (32) or the egress gateway device (34), respectively.

5. The method according to claim 4, **characterized in that** step g) comprises one or both of the following:
g1) Queuing for a preset queuing duration; and/or
g2) Queuing for a preset maximum amount of data and/or a maximum number of data packages.

6. The method according to any of claims 2 to 5, further comprising one or both of the following:
g3) Recovering data (40) by requesting re-transmission of any data package (42) missed at a gateway device (18) from the respective previous gateway device (18); and/or
g4) Reporting a re-transmission of and/or a data miss event with respect to any data package (42) to the ingress gateway device (32) as connection-related information (46).

7. The method according to any of the preceding claims, **characterized in that** step d) further comprises:
d1) Querying, by the ingress gateway device (32) and representative for the end-user device (20), at least one gateway device (18) having been indicated at least one connected server device (24) for providing the requested network service as suitable server device (30); and
d2) Acknowledging, by the ingress gateway device (32) and to the end-user device (20), a response of a corresponding server device (36) based on the querying.

8. The method according to any of the preceding claims, **characterized in that** step b) further comprises:
b1) By the at least one gateway device (18) having been indicated at least one connected server device (24) for providing the network service as suitable server device (30), announcing said network service to the plurality of gateway devices (18) via the time-varying network (12).

9. The method according to any of the preceding claims, further comprising:
h) Gathering, by the ingress gateway device (32), connection-related information (46) with respect to the data transport over the at least one established transport connection (38).

10. The method according to claim 9, further comprising one or both of the following:
i) Selecting, based on said connection-related information (46), the egress gateway device (34) in any subsequent data transport; and/or
j) Migrating, based on said connection-related information, the at least one established transport connection (38) to another suitable server device (30).

11. The method according to claim 9 or 10, **characterized in that** the connection-related information (46) is based on a number of reported re-transmissions and/or an accumulated delay of the data transport and/or an amount of delayed data (40) and/or a number of delayed data packages (42).

12. A network arrangement (10) comprising means for carrying out the method according to any of the preceding claims.

13. A gateway device (18) adapted for the network arrangement (10) according to claim 12.

14. A computer program which, when the program is executed by a network arrangement (10), cause the network arrangement (10) to carry out the method of any of the claims 1 to 12.

15. A computer-readable data carrier having stored thereon the computer program of claim 14.
